# EUROPEAN PATENT SPECIFICATION

(11) **EP 3 511 180 B1**
(45) Date of publication and mention of the grant of the patent: **27.05.2020**
(21) Application number: 18208041.6
(22) Date of filing: 23.11.2018
(51) Int. Cl.: B60C 13/00

(54) **TYRE**
REIFEN
PNEUMATIQUE

(30) Priority: 10.01.2018 JP 2018002100
(43) Date of publication of application: 17.07.2019
(73) Proprietor: SUMITOMO RUBBER INDUSTRIES, LTD., Kobe-shi, Hyogo-ken 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- EP-A1- 0 490 247
- JP-A- 2007 083 604
- JP-A- 2008 273 505
- US-A1- 2009 218 019

## Description

### Technical Field

The present invention relates to a tyre having improved legibility of a mark provided on a sidewall portion.

### Background Art

On a surface of at least one of the sidewall portions of the tyre, a mark which is letters, a symbol, and the like indicating the manufacturer name, brand name, size, and the like of the tyre is formed. And in order to improve the legibility of the mark, for example, the mark is formed to be one step higher than the surface of the sidewall portion, and a ridge is provided on the surface of the mark (for example, see Japanese Unexamined Patent Application Publication No. H9-86106).

However, conventional marks have a constant height, therefore, even when a ridge is formed on the surface thereof, they have monotonous appearance and little change in contrast. Thereby, the legibility cannot be sufficiently improved.

A tyre in accordance with the preamble of claim 1 is known from documents EP 0 490 247 A1 and JP 2008 273505 A.

### summary of the Invention

An object of the present invention is to provide a tyre capable of improving design by providing a change in the appearance of the marks and improving the legibility of the marks by giving contrast between the surfaces of the marks and their reference surface. This object is satisfied by a tyre having the features of claim 1.

In one aspect of the present invention, a tyre comprises a sidewall portion provided with a mark indicating portion having one or more marks, wherein the mark indicating portion comprises a reference surface provided on a surface of the sidewall portion and the marks formed on the reference surface, a surface of the or each mark is inclined in a tyre radial direction with respect to the reference surface, the or each mark is provided with a concave portion in which a surface thereof is lower than the reference surface and a convex portion in which a surface thereof is higher than the reference surface, and the concave portion is arranged on one side in the tyre radial direction and the convex portion arranged on the other side in the tyre radial direction.

In another aspect of the invention, it is preferred that the mark indicating portion is provided with a base portion projecting from the surface of the sidewall portion at a constant height, and a surface of the base portion forms the reference surface.

In another aspect of the invention, it is preferred that a depth of the concave portion at a maximum depth portion thereof from the reference surface is not more than the height of the base portion from the surface of the sidewall portion.

In another aspect of the invention, it is preferred that the depth of the concave portion at the maximum depth portion from the reference surface is in a range of from 0.8 to 1.2 times a height of the convex portion at a maximum height portion thereof from the reference surface.

In another aspect of the invention, it is preferred that the mark indicating portion is provided with a plurality of small protruding portions on either the reference surface or the surface of the or each mark, and each of the small protruding portions has a maximum diameter in a range of from 50 to 1000 micro meters and a protruding height in a range of from 50 to 1000 micro meters, and a distance between centers of a pair of the small protruding portions adjacent to each other is in a range of from 200 to 1000 micro meters.

In another aspect of the invention, it is preferred that each of the small protruding portions has a truncated cone shape having a smaller diameter on a side of an upper end thereof.

In one aspect of the present invention, the surface of the or each mark formed on the reference surface is inclined in the tyre radial direction with respect to the reference surface. And by this inclination, the or each mark is provided with the concave portion lower than the reference surface and the convex portion higher than the reference surface. Thereby, it is possible that a change is given to the appearance of the or each mark, therefore, it is possible that the design is improved.

Further, because the surface of the or each mark is inclined, it is possible that a manner of light reflection is made different from the reference surface, therefore, it is possible that contrast is increased. Moreover, in the or each mark, by the concave portion and the convex portion, it is possible that a large change is caused in the shadow and that the stereoscopic effect is increased. And by the synergistic effect of these, it is possible that the legibility of the or each mark is improved.

### Brief Description of the Drawings

Fig. 1 is a partial perspective view of a tyre as an embodiment of the present invention.
Fig. 2 is an enlarged partial perspective view of marks.
Fig. 3 is an enlarged cross-sectional view of one of the marks taken along A-A line of Fig. 2.
Fig. 4A is a partial plan view showing an arrangement of small protruding portions.
Fig. 4B is a cross-sectional view of the small protruding portions.

### Description of the Preferred Embodiment

An embodiment of the present invention will now be described below in detail.

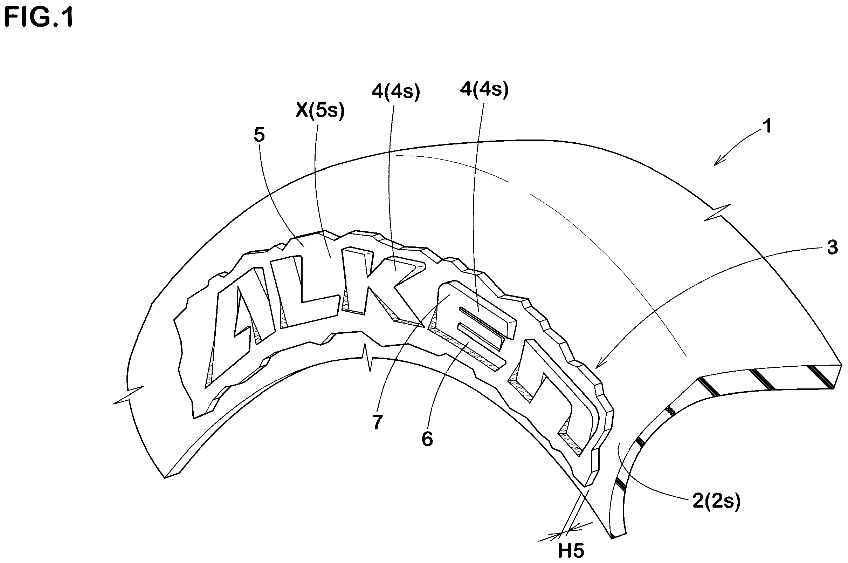

As shown in Fig. 1, a tyre 1 in this embodiment is provided with one or more mark indicating portions 3 in at least one of sidewall portions 2.

Each of the mark indicating portions 3 is provided with a reference surface (X) provided on a surface (2s) of a respective one of the sidewall portions 2 and one or more marks 4 (a plurality of the marks 4 in this embodiment) formed on the reference surface (x). In this embodiment, each of the mark indicating portions 3 is provided with a base portion 5 which projects stepwise from the surface (2s) of a respective one of the sidewall portions 2 at a constant height (H5) (that is, a top surface of the base portion is not inclined with respect to the surface (2s)) and a surface (5s) of the base portion 5 forms the reference surface (X).

Each of the marks 4 is a letter, a symbol, a figure, and the like for representing the manufacturer name, brand name, size, and the like of the tyre, and in this embodiment, a case is shown in which a brand name consisting of a plurality of the marks 4 is formed on the reference surface (X).

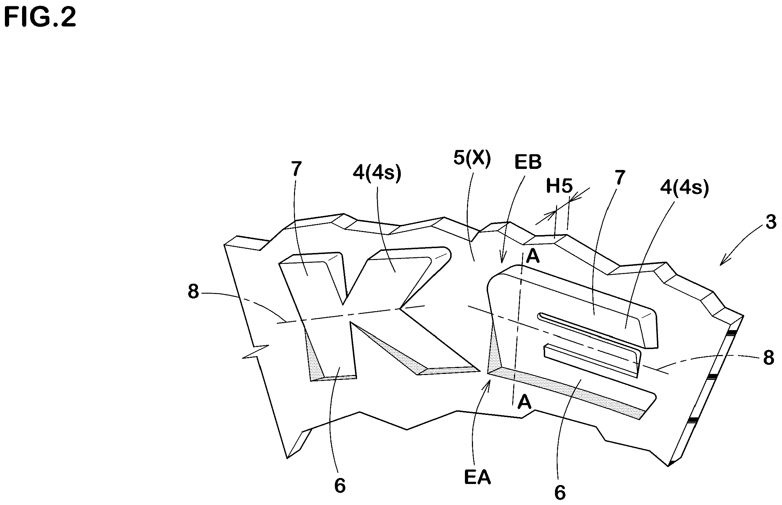

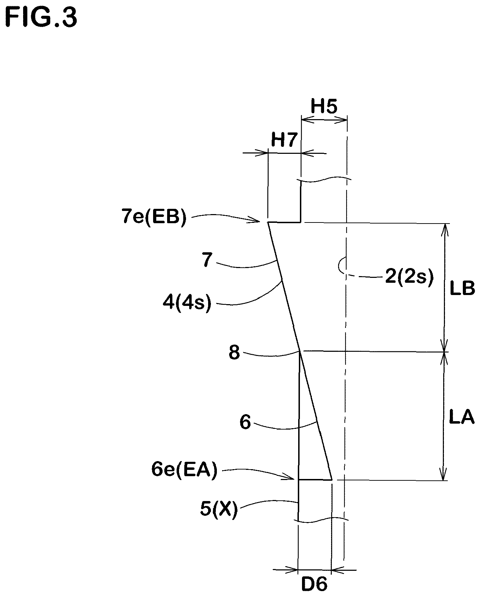

As shown in Figs. 2 and 3, a surface (4s) of each of the marks 4 is inclined in a tyre radial direction with respect to the reference surface (X). And by this inclination, each of the marks 4 is provided with a concave portion 6 in which the surface (4s) is lower (that is, positioned on an inner side of the tyre) than the reference surface (X), and a convex portion 7 in which the surface (4s) is higher (that is, positioned on an outer side of the tyre) than the reference surface (X). The concave portion 6 is arranged on one side in the tyre radial direction (on an inner side in the tyre radial direction in the figure) and the convex portion 7 is arranged on the other side in the tyre radial direction (on an outer side in the tyre radial direction). A boundary 8 between the concave portion 6 and the convex portion 7 has the same height as the reference surface (X). The boundary 8 in this embodiment extends in a tyre circumferential direction.

The surface (4s) of each of the marks 4 is inclined so that the concave portion 6 and the convex portion 7 are formed, therefore, each of the mark indicating portions 3 has a novel design in which a part of a respective one of the marks 4 is buried in the base portion 5, thereby, a change is given to the appearance of the marks 4, therefore, it is possible that the design is improved. Further, because the surface (4s) of each of the marks 4 is inclined, it is possible that the manner of light reflection is made different from the reference surface (X), therefore, it is possible that contrast (difference in brightness) is increased. Moreover, in the marks 4, by the concave portions 6 and the convex portions 7, it is possible that a large change is caused in the shadow and that the stereoscopic effect is increased. And by the synergistic effect of these, it is possible that the legibility of the marks 4 is improved.

As shown in Fig. 3, in this embodiment, a depth (D6) from the reference surface (X) of the concave portion 6 at a maximum depth portion (6e) is not more than the height (H5) of the base portion 5 from the surface (2s) of the sidewall portion 2. In this embodiment, a case in which the depth (D6) is smaller than the height (H5) is shown. Thereby, it is possible that a gauge thickness of a sidewall rubber at the maximum depth portion (6e) is secured to be not less than a gauge thickness of the sidewall rubber at a portion thereof other than the mark indicating portions 3, therefore, it is possible that damage due to the concave portion 6 is suppressed.

It is preferred that the depth (D6) is in the range of from 0.8 to 1.2 times a height (H7) of the convex portion 7 from the reference surface (X) at a maximum height portion (7e), that is, it is preferred that the depth (D6) and the height (H7) is about the same. Thereby, the distribution of the concave portion 6 and the convex portion 7 is balanced, therefore, it is possible that the effect of improving the legibility is increased. From the similar reason, it is preferred as well that in each of the marks 4, a distance (LA) in the tyre radial direction between the boundary 8 and an end portion (EA) on one side in the tyre radial direction of the mark 4 is in the range of from 0.8 to 1.2 times a distance (LB) in the tyre radial direction between the boundary 8 and an end portion (EB) on the other side in the tyre radial direction of the mark 4.

Here, the end portion (EA) means an end portion positioned on the one side in the tyre radial direction most of each of the marks 4, and the end portion (EB) means an end portion positioned on the other side in the tyre radial direction most of each of the marks 4. Further, the maximum depth portion (6e) of the concave portion 6 is formed at the position of the end portion (EA), and the maximum height portion (7e) of the convex portion 7 is formed at the position of the end portion (EB).

It is preferred that the surface (4s) of each of the marks 4 is a flat surface, however, it may be a curved surface extending curvedly in an arc shape in the tyre radial direction, for example.

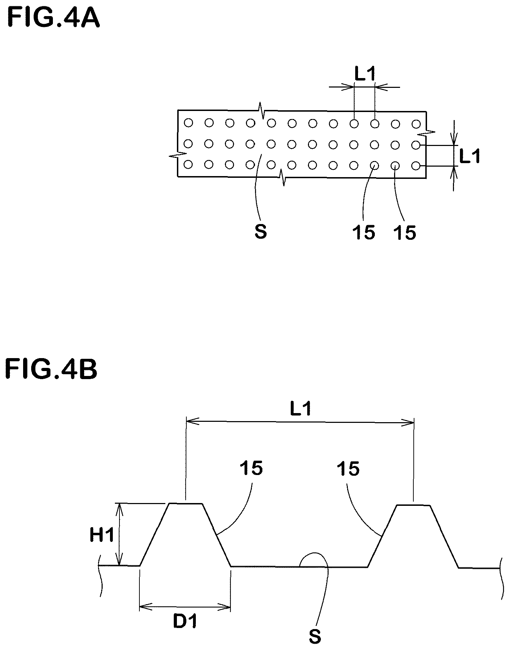

Further, in each of the mark indicating portions 3, as shown in Figs. 4A and 4B, it is preferred that a surface (S) which is either the reference surface (X) or the surface (4s) of each of the marks 4 is provided with a plurality of small protruding portions 15 each protruding from the surface (S). It is preferred that, each of the small protruding portions 15 has a maximum diameter (D1) in the range of from 50 to 1000 micro meters and a protruding height (H1) in the range of from 50 to 1000 micro meters, and that a distance (L1) between centers of a pair of the small protruding portions 15 adjacent to each other is in the range of from 200 to 1000 micro meters. In particular, it is more preferred that each of the small protruding portions 15 is configured as a truncated cone shape having a smaller diameter on a side of an upper end thereof.

It is possible that the small protruding portions 15 configured as such irregularly reflect light and make the surface (S) (the reference surface (X) or the surface (4s) of the mark 4) black. Thereby, it is possible that the contour shapes of the marks 4 are made clearer, therefore, it is possible that the legibility of the marks 4 are further improved. As a result of research by the present inventor, when the maximum diameter (D1) and the protruding height (H1) of each of the small protruding portions 15, and the distance (L1) of the small protruding portions 15 are outside the above ranges, the surface (S) looks whitish due to the reflection of light, therefore, the contrast difference between the surface (S) and the surface (X) tends to be decreased. Note that by configuring each of the small protruding portions 15 to be a truncated cone shape, it is possible that the reflection of light is suppressed while the strength is increased as compared with a cylindrical shape.

In this embodiment, a case is shown in which the small protruding portions 15 are arranged in a grid pattern, but they may be arranged in a staggered pattern, or may be randomly arranged as long as the distance (L1) satisfies the above range.

In each of the mark indicating portions 3, it is possible that the marks 4 are directly formed on the surface (2s) of a respective one of the sidewall portions 2 without having the base portion 5 formed thereon. In this case, the surface (2s) of the sidewall portion 2 forms the reference surface (X). In this case, in order to distinguish the mark indicating portions 3 from other portions, it is preferred that the surface (2s) of each of the sidewall portions 2 is provided with a rib and the like having a small height and surrounding each of the mark indicating portions 3.

while detailed description has been made of the tyre as an especially preferred embodiment of the present invention, the present invention can be embodied in various forms without being limited to the illustrated embodiment.

### working Examples (Examples)

Tyres provided with the mark indicating portions on the surface of the sidewall portions were made by way of test according to the specifications listed in Table 1, and then the legibility of the marks was compared. The height of the base portion was the same for each of the test tyres, and the protruding height (the maximum height if the surface of each of the marks was inclined) of each of the marks from the surface of the base portion (reference surface (X)) was the same for each of the test tyres.

In Reference 1, each of the marks had a constant height. In Reference 2, the surface of each of the marks was inclined but the entire body of each of the marks protruded from the base portion. In Examples 1 to 4, the depth (D6) of each of the concave portions at the maximum depth portion thereof was not more than the height (H5) of the base portion.

In the References 1 and 2 and the Examples 1 to 3, the small protruding portions were formed on the surface of each of the marks. In each of the test tyres, each of the small protruding portions had a truncated cone shape, the maximum diameter (D1) thereof was 320 micro meters, the protruding height (H1) thereof was 500 micro meters, and the distance (L1) was 400 micro meters.

The legibility was evaluated by a visual observation and the evaluation was indicated by an index based on the Reference 1 being 100, wherein a larger numerical value was better.

**Table 1**

| | Ref. 1 | Ref.2 | Ex.1 | EX. 2 | Ex. 3 | Ex.4 |
|---|---|---|---|---|---|---|
| < Mark indicating portion > | | | | | | |
| Base portion | Present | | | | | |
| Marks | Present | | | | | |
| Surface | not inclined | inclined | | | | |
| Concave portion | Absent | Absent | Present | | | |
| Convex portion | Present | | | | | |
| Depth (D6) of Concave portion / Height (H7) of Convex portion | - - | - - | 1.0 | 0.8 | 1.2 | 1.0 |
| Small protruding portion | Present | | | | | Absent |
| Legibility | 100 | 102 | 115 | 113 | 117 | 110 |

As shown in Table 1, it was confirmed that the tyres as the Examples showed excellent legibility of the marks.

## Claims

1. A tyre (1) comprising a sidewall portion (2) provided with a mark indicating portion (3) having one or more marks (4), wherein
the mark indicating portion (3) comprises a reference surface (X) provided on a surface (2s) of the sidewall portion (2) and the marks (4) formed on the reference surface (X),
a surface (4s) of the or each mark (4) is inclined in a tyre radial direction with respect to the reference surface (X),
the or each mark (4) is provided with a concave portion (6) in which a surface (4s) thereof is lower than the reference surface (X) and a convex portion (7) in which a surface (4s) thereof is higher than the reference surface (X), and
the concave portion (6) is arranged on one side in the tyre radial direction and the convex portion (7) arranged on the other side in the tyre radial direction,
an end portion EA of each of the marks (4) is positioned on the one side in the tyre radial direction, and an end portion EB of each of the marks (4) is positioned on the other side in the tyre radial direction,
**characterized in that**
a maximum depth portion (6e) of the concave portion (6) is formed at the position of the end portion EA, and a maximum height portion (7e) of the convex portion (7) is formed at the position of the end portion EB.

2. The tyre (1) according to claim 1, wherein
the mark indicating portion (3) is provided with a base portion (5) projecting from the surface (2s) of the sidewall portion (2) at a constant height (H5), and
a surface (5s) of the base portion (5) forms the reference surface (X).

3. The tyre (1) according to claim 2, wherein
a depth (D6) of the concave portion (6) at a maximum depth portion (6e) thereof from the reference surface (X) is not more than the height (H5) of the base portion (5) from the surface (2s) of the sidewall portion (2).

4. The tyre (1) according to any one of claims 1 to 3, wherein
the depth (D6) of the concave portion (6) at the maximum depth portion (6e) from the reference surface (X) is in a range of from 0.8 to 1.2 times a height (H7) of the convex portion (7) at a maximum height portion (7e) thereof from the reference surface (X).

5. The tyre (1) according to any one of claims 1 to 4, wherein
the mark indicating portion (3) is provided with a plurality of small protruding portions (15) on either the reference surface (X) or the surface (4s) of the or each mark (4), and
each of the small protruding portions (15) has a maximum diameter (D1) in a range of from 50 to 1000 micro meters and a protruding height (H1) in a range of from 50 to 1000 micro meters, and a distance (L1) between centers of a pair of the small protruding portions adjacent to each other is in a range of from 200 to 1000 micro meters.

6. The tyre (1) according to claim 5, wherein
each of the small protruding portions (15) has a truncated cone shape having a smaller diameter on a side of an upper end thereof.

## Patentansprüche

1. Reifen (1) mit einem Seitenwandabschnitt (2), der mit einem Markierungsanzeigeabschnitt (3) mit einer oder mehreren Markierungen (4) versehen ist, wobei
der Markierungsanzeigeabschnitt (3) eine Bezugsoberfläche (X) umfasst, die auf einer Oberfläche (2s) des Seitenwandabschnitts (2) vorgesehen ist, und die Markierungen (4) auf der Bezugsoberfläche (X) gebildet sind,
eine Oberfläche (4s) von der oder jeder Markierung (4) in einer radialen Richtung des Reifens in Bezug auf die Bezugsoberfläche (X) geneigt ist,
die oder jede Markierung (4) mit einem konkaven Abschnitt (6), in welchem eine Oberfläche (4s) davon niedriger als die Bezugsoberfläche (X) ist, und einem konvexen Abschnitt (7), in welchem eine Oberfläche (4s) davon höher als die Bezugsoberfläche (X) ist, versehen ist, und
der konkave Abschnitt (6) auf einer Seite in der radialen Richtung des Reifens angeordnet ist und der konvexe Abschnitt (7) auf der anderen Seite in der radialen Richtung des Reifens angeordnet ist,
ein Endabschnitt EA von jeder der Markierungen (4) auf der einen Seite in der radialen Richtung des Reifens positioniert ist und ein Endabschnitt EB von jeder der Markierungen (4) auf der anderen Seite in der radialen Richtung des Reifens positioniert ist,
**dadurch gekennzeichnet, dass**
ein Abschnitt (6e) maximaler Tiefe des konkaven Abschnitts (6) an der Position des Endabschnitts EA gebildet ist und ein Abschnitt (7e) maximaler Höhe des konvexen Abschnitts (7) an der Position des Endabschnitts EB gebildet ist.

2. Reifen (1) nach Anspruch 1, wobei
der Markierungsanzeigeabschnitt (3) mit einem Basisabschnitt (5) versehen ist, der von der Oberfläche (2s) des Seitenwandabschnitts (2) in einer konstanten Höhe (H5) vorsteht, und
eine Oberfläche (5s) des Basisabschnitts (5) die Bezugsoberfläche (X) bildet.

3. Reifen (1) nach Anspruch 2, wobei
eine Tiefe (D6) des konkaven Abschnitts (6) an einem Abschnitt maximaler Tiefen (6e) davon von der Bezugsoberfläche (X) nicht mehr als die Höhe (H5) des Basisabschnitts (5) von der Oberfläche (2s) des Seitenwandabschnitts (2) beträgt.

4. Reifen (1) nach einem der Ansprüche 1 bis 3, wobei
die Tiefe (D6) des konkaven Abschnitts (6) an dem Abschnitt (6e) maximaler Tiefe von der Referenzoberfläche (X) in einem Bereich vom 0,8- bis 1,2-fachen einer Höhe (H7) des konvexen Abschnitts (7) an einem Abschnitt (7e) maximaler Höhe davon von der Bezugsoberfläche (X) liegt.

5. Reifen (1) nach einem der Ansprüche 1 bis 4, wobei
der Markierungsanzeigeabschnitt (3) mit einer Vielzahl von kleinen vorstehenden Abschnitten (15) auf entweder der Bezugsoberfläche (X) oder der Oberfläche (4s) von der oder jeder Markierung (4) versehen ist, und
ein jeder der kleinen vorstehenden Abschnitte (15) einen maximalen Durchmesser (D1) in einem Bereich von 50 bis 1000 Mikrometern und eine Vorstandshöhe (H1) in einem Bereich von 50 bis 1000 Mikrometern aufweist, und ein Abstand (L1) zwischen Zentren eines Paares der kleinen vorstehenden Abschnitte nebeneinander in einem Bereich von 200 bis 1000 Mikrometern liegt.

6. Reifen (1) nach Anspruch 5, wobei
ein jeder der kleinen vorstehenden Abschnitte (15) eine Kegelstumpfform mit einem kleineren Durchmesser auf einer Seite eines oberen Endes davon aufweist.

## Revendications

1. Pneumatique (1) comprenant une portion formant paroi latérale (2) dotée d'une portion d'indication de marque (3) ayant une ou plusieurs marques (4), dans lequel
la portion d'indication de marque (3) comprend une surface de référence (X) prévue sur une surface (2s) de la portion formant paroi latérale (2) et les marques (4) formées sur la surface de référence (X),
une surface (4s) de la marque ou de chaque marque (4) est inclinée dans une direction radiale du pneumatique par rapport à la surface de référence (X),
la marque ou chaque marque (4) est dotée d'une portion concave (6) dans laquelle une surface (4s) de celle-ci est plus basse que la surface de référence (X) et d'une portion convexe (7) dans laquelle une surface (4s) de celle-ci est plus haute que la surface de référence (X), et
la portion concave (6) est agencée sur un côté dans la direction radiale du pneumatique et la portion convexe (7) est agencée sur l'autre côté dans la direction radiale du pneumatique,
une portion d'extrémité EA de chacune des marques (4) est positionnée sur un côté dans la direction radiale du pneumatique, et une portion d'extrémité EB de chacune des marques (4) est positionnée sur l'autre côté dans la direction radiale du pneumatique,
**caractérisé en ce que**
une portion de profondeur maximum (6e) de la portion concave (6) est formée à la position de la portion d'extrémité EA, et une portion de hauteur maximum (7e) de la portion convexe (7) est formée à la position de la portion d'extrémité EB.

2. Pneumatique (1) selon la revendication 1, dans lequel
la portion d'indication de marque (3) est dotée d'une portion de base (5) qui se projette depuis la surface (2s) de la portion formant paroi latérale (2) à une hauteur constante (H5), et
une surface (5s) de la portion de base (5) forme la surface de référence (X).

3. Pneumatique (1) selon la revendication 2, dans lequel
une profondeur (D6) de la portion concave (6) au niveau d'une portion de profondeur maximum (6e) de celle-ci depuis la surface de référence (X) n'est pas supérieure à la hauteur (H5) de la portion de base (5) depuis la surface (2s) de la portion formant paroi latérale (2).

4. Pneumatique (1) selon l'une quelconque des revendications 1 à 3, dans lequel
la profondeur (D6) de la portion concave (6) au niveau de la portion de profondeur maximum (6e) depuis la surface de référence (X) est dans une plage de 0,8 à 1,2 fois une hauteur (H7) de la portion convexe (7) au niveau d'une portion de hauteur maximum (7e) de celle-ci depuis la surface de référence (X).

5. Pneumatique (1) selon l'une quelconque des revendications 1 à quatre, dans lequel
la portion d'indication de marque (3) est dotée d'une pluralité de petites portions en projection (15) soit sur la surface de référence (X) soit sur la surface (4s) de la marque ou de chaque marque (4), et
chacune des petites portions en projection (15) a un diamètre maximum (D1) dans une plage de 50 à 1000 µm et une hauteur de projection (H1) dans une plage de 50 à 1000 µm, et une distance (L) entre les centres d'une paire de petites portions en projection adjacentes l'une à l'autre est dans une plage de 200 à 1000 µm.

6. Pneumatique (1) selon la revendication 5, dans lequel
chacune des petites portions en projection (15) a une forme de cône tronqué ayant un plus petit diamètre sur un côté de son extrémité supérieure.
